# EUROPEAN PATENT APPLICATION

(11) **EP 4 620 758 A1**
(43) Date of publication of application: **24.09.2025**
(21) Application number: 23890473.4
(22) Date of filing: 17.10.2023
(51) Int. Cl.: B60W 20/15

(54) **ENGINE CONTROL METHOD, HYBRID VEHICLE, AND STORAGE MEDIUM**

(30) Priority: 17.11.2022 CN 202211441265
(71) Applicant: BYD Company Limited, Shenzhen, Guangdong 518118 (CN)
(72) Inventor: LI, Lingkai, Shenzhen, Guangdong 518118 (CN); WU, Gang, Shenzhen, Guangdong 518118 (CN); SHI, Mingjie, Shenzhen, Guangdong 518118 (CN); LU, Guoxiang, Shenzhen, Guangdong 518118 (CN)
(74) Representative: Taor, Simon Edward William
(86) International application number: PCT/CN2023/125007
(87) International publication number: WO 2024/104036

(57) **Abstract**

An engine control method, a hybrid vehicle, and a storage medium. The method is applied to the hybrid vehicle, the hybrid vehicle comprises an engine and a power battery, and the method comprises: acquiring a current temperature of the engine, a current operation parameter of the power battery, and a battery parameter reference value; according to the current temperature and the battery parameter reference value, determining a battery parameter threshold of the power battery at the current temperature, wherein the lower the current temperature is, the larger the battery parameter threshold corresponding to the current temperature is; determining whether the current operation parameter is less than or equal to the battery parameter threshold; and if the current operation parameter is less than or equal to the battery parameter threshold, outputting a starting signal to start the engine.

## Description

### CROSS-REFERENCE TO RELATED APPLICATIONS

The present disclosure claims priority to Chinese Patent Application No. 202211441265.6 filed on November 17, 2022, which is incorporated herein by reference in its entirety.

### FIELD

The present disclosure relates to the field of hybrid vehicles, and in particular, to an engine control method, a hybrid vehicle, and a storage medium.

### BACKGROUND

An electric hybrid vehicle uses an engine start/stop technology. To be specific, when the vehicle is in a pure electric mode, if the engine is required to output power, the engine is started to participate in driving. In a low-temperature environment, when the pure electric mode cannot meet a driving requirement due to a low state of charge (SOC) of a power battery, a low allowable discharge power of the power battery, or a sudden increase in a required driving torque, the existing hybrid vehicle starts the engine and enables the engine to output large torque. In this case, due to poor fluidity of lubricating oil in the engine, the engine is easily damaged due to poor lubrication.

### SUMMARY

To resolve the foregoing technical problem or at least partially resolve the foregoing technical problem, the present disclosure provides an engine control method, a hybrid vehicle, and a storage medium.

The present disclosure provides an engine control method. The engine control method is applied to a hybrid vehicle. The hybrid vehicle includes an engine and a power battery. The engine control method includes: A current temperature of the engine, a current operation parameter of the power battery, and a battery parameter reference value are obtained. A battery parameter threshold of the power battery at the current temperature is determined based on the current temperature and the battery parameter reference value. A lower current temperature indicates a larger battery parameter threshold corresponding to the current temperature. If the current operation parameter is less than or equal to the battery parameter threshold, a starting signal is output to start the engine.

According to the engine control method provided in the present disclosure, the battery parameter threshold of the power battery at the current temperature is determined based on the current temperature and the battery parameter reference value. A large battery parameter threshold is set at a low temperature. The engine is started when the current operation parameter of the power battery is less than or equal to the battery parameter threshold at the current temperature. In this way, in a low-temperature environment, the hybrid vehicle starts the engine when a driving capability of the power battery is high, to prevent the engine from outputting large torque when started, and provide sufficient warm-up time for the engine, thereby avoiding damage to the engine due to poor lubrication.

Optionally, that the battery parameter threshold of the power battery at the current temperature is determined based on the current temperature and the battery parameter reference value includes: A temperature coefficient corresponding to the current temperature is determined. The battery parameter reference value is multiplied by the temperature coefficient to obtain the battery parameter threshold.

Optionally, that the temperature coefficient corresponding to the current temperature is determined includes: A torque limit value corresponding to the current temperature is determined. The temperature coefficient corresponding to the torque limit value is determined.

Optionally, a lower current temperature indicates a smaller torque limit value corresponding to the current temperature. A smaller torque limit value indicates a larger temperature coefficient corresponding to the torque limit value.

Optionally, that the torque limit value corresponding to the current temperature is determined includes: A preset torque limit value calibration table is obtained. A mapping relationship between a number of temperature data ranges and a number of torque limit values is recorded in the preset torque limit value calibration table. The torque limit value corresponding to the current temperature is determined based on the preset torque limit value calibration table.

Optionally, that the temperature coefficient corresponding to the torque limit value is determined includes: A preset temperature coefficient calibration table is obtained. A mapping relationship between a number of torque limit data and a number of temperature coefficients is recorded in the preset temperature coefficient calibration table. The temperature coefficient corresponding to the torque limit value is determined based on the preset temperature coefficient calibration table.

Optionally, the current operation parameter of the power battery includes a current residual capacity. The battery parameter reference value includes a residual capacity reference value. The battery parameter threshold includes a residual capacity threshold.

Optionally, the current operation parameter of the power battery includes a current allowable discharge power. The battery parameter reference value includes an allowable discharge power reference value. The battery parameter threshold includes an allowable discharge power threshold.

The present disclosure further provides a hybrid vehicle. The hybrid vehicle includes an engine, a power battery, a detection unit, a memory, and a controller. The detection unit is electrically connected to the engine and the power battery separately. The detection unit is configured to detect a current temperature of the engine and a current operation parameter of the power battery. The memory is configured to store executable instructions. The controller is electrically connected to the detection unit and the memory separately. The controller is configured to obtain the current temperature of the engine and the current operation parameter of the power battery that are detected by the detection unit, and execute the executable instructions stored in the memory based on the current temperature and the current operation parameter, to implement the foregoing method.

The present disclosure further provides a computer-readable storage medium. The computer-readable storage medium stores executable instructions. The executable instructions, when executed by a processor, implement the foregoing method.

Other aspects and advantages of the present disclosure will be given in the following descriptions, some of which will become apparent from the following descriptions or may be learned from practices of the present disclosure.

### BRIEF DESCRIPTION OF THE DRAWINGS

FIG. 1 is a schematic structural diagram of a hybrid vehicle according to an embodiment of the present disclosure.
FIG. 2 is a diagram of an energy transfer path of the hybrid vehicle in FIG. 1 in a pure electric condition.
FIG. 3 is a diagram of an energy transfer path of the hybrid vehicle in FIG. 1 in a series condition.
FIG. 4 is a diagram of an energy transfer path of the hybrid vehicle in FIG. 1 in a parallel condition.
FIG. 5 is a diagram of an energy transfer path of the hybrid vehicle in FIG. 1 in a combined condition.
FIG. 6 is a schematic flowchart of an engine control method according to an embodiment of the present disclosure.
FIG. 7 is a detailed flowchart of step 620 in FIG. 6.
FIG. 8 is a schematic flowchart of another engine control method according to an embodiment of the present disclosure.
FIG. 9 is a schematic diagram of a torque limit value calibration table according to an embodiment of the present disclosure.
FIG. 10 is a schematic diagram of a temperature coefficient calibration table according to an embodiment of the present disclosure.
FIG. 11 is a schematic structural diagram of another hybrid vehicle according to an embodiment of the present disclosure.

In the drawings:
Hybrid vehicle 10
Vehicle control unit 100
Engine controller 200
Motor controller 300
Engine 210
First motor 310
Second motor 320
Power battery 400
Wheel 500
Detection unit 600
Memory 700
Controller 800
Steps 610 to 640, 621 and 622, and 631 to 633

The present disclosure is further described in the following specific implementations with reference to the foregoing accompanying drawings.

### DETAILED DESCRIPTION

The following clearly and completely describes the technical solutions in the embodiments of the present disclosure with reference to the accompanying drawings in the embodiments of the present disclosure. Apparently, the described embodiments are merely some of the embodiments of the present disclosure rather than all of the embodiments. All other embodiments obtained by a person of ordinary skill in the art based on the embodiments of the present disclosure without creative efforts shall fall within the protection scope of the present disclosure.

In the descriptions of the present disclosure, it should be noted that terms "first", "second", and the like are merely used for the purpose of description, and cannot be understood as indicating or implying relative importance.

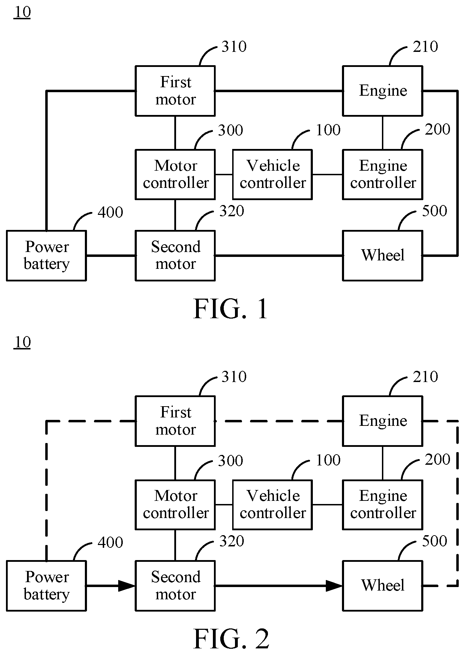

As shown in FIG. 1, a hybrid vehicle 10 includes a vehicle control unit 100, an engine controller 200, an engine 210, a motor controller 300, a first motor 310, a second motor 320, a power battery 400, and a wheel 500. The engine 210 is connected to the wheel 500 through a first clutch (not shown in the figure). The second motor 320 is connected to the wheel 500 through a second clutch (not shown in the figure). Both the engine 210 and the second motor 320 can provide kinetic energy for the wheel 500. The engine 210 is further connected to the first motor 310. The power battery 400 is electrically connected to the first motor 310 and the second motor 320 separately. The engine 210 may further drive the first motor 310 to generate electricity, to charge the power battery 400. Exemplarily, the engine 210 may be a gasoline engine, a diesel engine, or an engine powered by another fuel like methanol or ethanol. The first motor 310 may be an integrated starter generator (ISG), a belt-driven starter generator (BSG), or the like. The second motor 320 may be an AC alternating current motor, a switched reluctance motor, a direct current permanent magnet motor, or the like.

The vehicle control unit 100 is electrically connected to the engine controller 200 and the motor controller 300 separately. The motor controller 300 is further electrically connected to the first motor 310 and the second motor 320 separately. The engine controller 200 is further electrically connected to the engine 210. The vehicle control unit 100 is configured to output a command signal to the engine controller 200 and the motor controller 300, to control working statuses of the first motor 310 and the second motor 320 through the motor controller 300, and control a working status of the engine 210 through the engine controller 200, so that the hybrid vehicle 10 operates in a series condition, a parallel condition, a combined condition, an engine condition, a pure electric condition, or a braking condition.

As shown in FIG. 2, when the hybrid vehicle 10 runs normally and smoothly and the power battery 400 has a sufficient capacity, that is, when a required power of the hybrid vehicle 10 is less than or equal to an output power of the second motor 320, a current residual capacity (also referred to as a state of charge, SOC) of the power battery 400 is greater than a residual capacity reference value (for example, 40%), and a current allowable discharge power of the power battery 400 is greater than an allowable discharge power reference value, the vehicle control unit 100 controls the hybrid vehicle 10 to operate in the pure electric condition.

In the pure electric condition, only the second motor 320 is used as a power source to drive the hybrid vehicle 10 to run. In this case, because the capacity of the power battery 400 is sufficient, and output kinetic energy converted from electric energy delivered by the power battery 400 to the second motor 320 is sufficient to meet a driving requirement of the hybrid vehicle 10, the engine 210 does not work.

When the required power of the hybrid vehicle 10 is greater than the output power of the second motor 320, or the current residual capacity (namely, SOC) of the power battery 400 is less than the residual capacity reference value (for example, 40%), or the current allowable discharge power of the power battery 400 is less than the allowable discharge power reference value, the vehicle control unit 100 controls the hybrid vehicle 10 to start the engine 210, so that the hybrid vehicle 10 switches from the pure electric condition to the series condition, the parallel condition, or the combined condition.

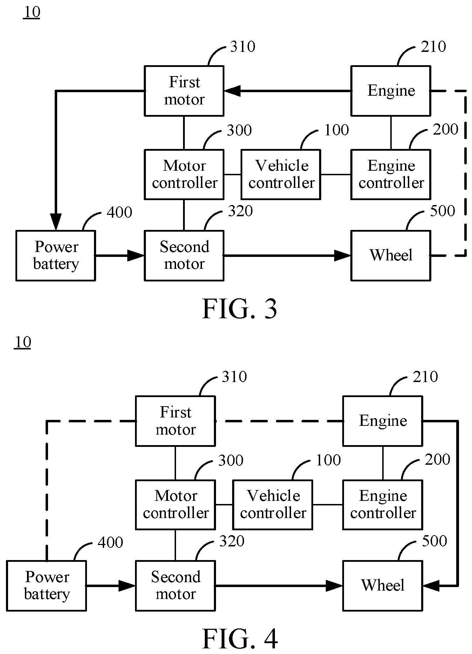

As shown in FIG. 3, in the series condition, the engine 210 drives the first motor 310 to generate electricity, to transfer kinetic energy of the engine 210 to the first motor 310, so that the first motor 310 operates in a generator mode, to convert the kinetic energy of the engine 210 into electric energy to charge the power battery 400. In this case, the engine 210 does not output driving force to the wheel 500. Meanwhile, the power battery 400 supplies power to the second motor 320, so that the second motor 320 operates in a motor mode, to convert electric energy output by the power battery 400 into kinetic energy and output the kinetic energy to the wheel 500, thereby driving the hybrid vehicle 10 to run.

As shown in FIG. 4, in the parallel condition, the engine 210 outputs kinetic energy to the wheel 500, to drive the hybrid vehicle 10 to run. The power battery 400 supplies power to the second motor 320. The second motor 320 operates in a motor mode, to convert electric energy output by the power battery 400 into kinetic energy and output the kinetic energy to the wheel 500. In this case, the engine 210 and the second motor 320 jointly provide driving force to the wheel 500.

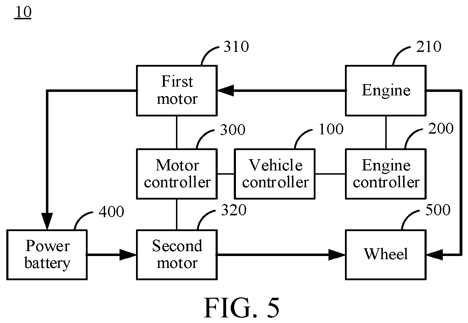

As shown in FIG. 5, in the combined condition, the engine 210 outputs kinetic energy to the wheel 500, to drive the hybrid vehicle 10 to run. The power battery 400 supplies power to the second motor 320. The second motor 320 operates in a motor mode, to convert electric energy output by the power battery 400 into kinetic energy and output the kinetic energy to the wheel 500. In addition, the engine 210 further drives the first motor 310 to generate electricity, to transfer part of kinetic energy of the engine 210 to the first motor 310, so that the first motor 310 operates in a generator mode, to convert the part of kinetic energy of the engine 210 into electric energy to charge the power battery 400. In this case, the engine 210 and the second motor 320 jointly provide driving force to the wheel 500. The engine 210 further provides the part of kinetic energy to charge the power battery 400.

In a low-temperature environment, when the required power of the hybrid vehicle 10 is greater than the output power of the second motor 320, or the current residual capacity (also referred to as a state of charge, SOC) of the power battery 400 is less than the residual capacity reference value (for example, 40%), or the current allowable discharge power of the power battery 400 is less than the allowable discharge power reference value, the existing hybrid vehicle starts the engine and enables the engine 210 to output large torque. In this case, due to poor fluidity of lubricating oil in the engine 210, the engine 210 is easily damaged due to poor lubrication.

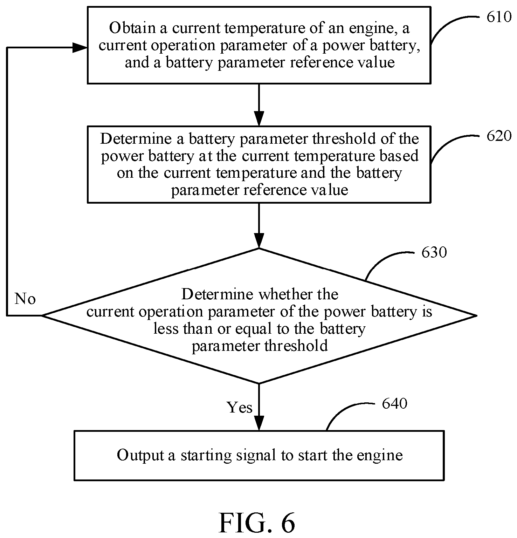

To resolve the problem that the engine 210 is easily damaged due to poor lubrication when the engine 210 is started and outputs large torque in the low-temperature environment, the present disclosure provides an engine control method. In the method, a current temperature of the engine, a current operation parameter of the power battery, and a battery parameter reference value are obtained. A battery parameter threshold of the power battery at the current temperature is determined based on the current temperature and the battery parameter reference value. If the current operation parameter is less than or equal to the battery parameter threshold, a starting signal is output to start the engine. Referring to FIG. 6, the method includes the following steps 610 to 640.

Step 610: A current temperature of the engine 210, a current operation parameter of the power battery 400, and a battery parameter reference value are obtained.

In this embodiment, the current operation parameter of the power battery 400 includes a current residual capacity and a current allowable discharge power. Correspondingly, the battery parameter reference value includes a residual capacity reference value and an allowable discharge power reference value. Exemplarily, the current temperature of the engine 210 may be obtained by detecting a water temperature at a water outlet of the engine 210 by using a temperature sensor (not shown in the figure). Certainly, in another embodiment, the current temperature of the engine 210 may alternatively be detected in another manner. The residual capacity reference value and the allowable discharge power reference value may be obtained and stored through testing before the hybrid vehicle 10 leaves the factory.

Step 620: A battery parameter threshold of the power battery 400 at the current temperature is determined based on the current temperature and the battery parameter reference value. A lower current temperature indicates a larger battery parameter threshold corresponding to the current temperature.

Step 630: If the current operation parameter of the power battery 400 is less than or equal to the battery parameter threshold, perform step 640; otherwise, return to step 610, to continue to obtain the current temperature of the engine 210, the current operation parameter of the power battery 400, and the battery parameter reference value.

In this embodiment, the current operation parameter of the power battery 400 is compared with the battery parameter threshold. If the current residual capacity of the power battery 400 is less than or equal to the residual capacity threshold at the current temperature, or if the current allowable discharge power of the power battery 400 is less than or equal to the allowable discharge power threshold at the current temperature, it is determined that the current operation parameter of the power battery 400 is less than or equal to the battery parameter threshold. In another embodiment, only the current residual capacity of the power battery 400 and the residual capacity threshold at the current temperature may be compared. When the current residual capacity of the power battery 400 is less than or equal to the residual capacity threshold at the current temperature, it is determined that the current operation parameter of the power battery 400 less than or equal to the battery parameter threshold. In still another embodiment, only the current allowable discharge power of the power battery 400 and the allowable discharge power threshold at the current temperature may be compared. When the current allowable discharge power of the power battery 400 is less than or equal to the allowable discharge power threshold at the current temperature, it is determined that the current operation parameter of the power battery 400 less than or equal to the battery parameter threshold.

Step 640: A starting signal is output to start the engine 210.

It may be understood that a lower current temperature indicates a larger battery parameter threshold corresponding to the current temperature. In this way, in a low-temperature environment, the hybrid vehicle 10 starts the engine 210 when a driving capability of the power battery 400 is high, to prevent the engine 210 from outputting large torque when started, and provide sufficient warm-up time for the engine 210, thereby avoiding damage to the engine 210 due to poor lubrication.

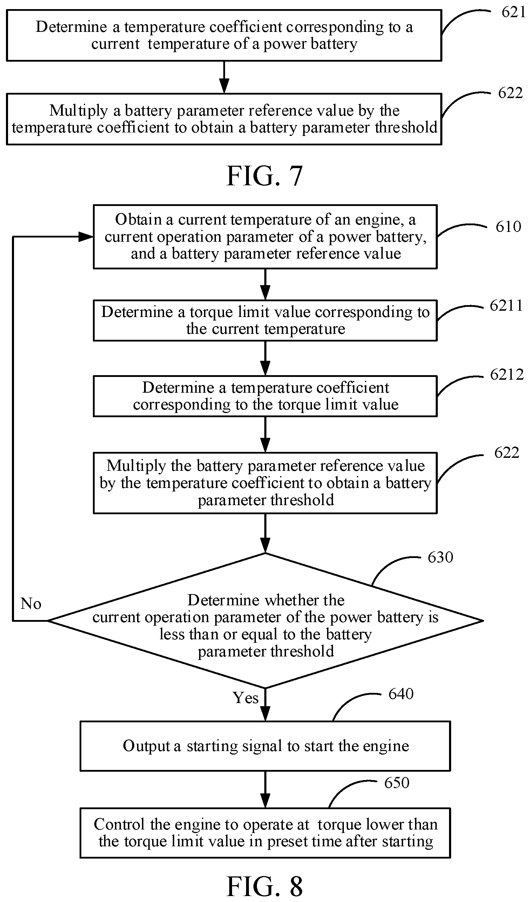

FIG. 7 is a detailed flowchart of step 620 in FIG. 6. A temperature coefficient corresponding to the current temperature of the power battery is determined. The battery parameter reference value is multiplied by the temperature coefficient to obtain the battery parameter threshold. Referring to FIG. 7, that the battery parameter threshold of the power battery 400 at the current temperature is determined based on the current temperature and the battery parameter reference value specifically includes steps 621 and 622.

Step 621: The temperature coefficient corresponding to the current temperature of the power battery 400 is determined. The temperature coefficient is greater than zero, and a lower current temperature indicates a larger temperature coefficient corresponding to the current temperature. Exemplarily, the temperature coefficient at the current temperature may be determined in a manner of looking up a table. Specifically, a preset temperature value calibration table is obtained, and the temperature coefficient corresponding to the current temperature is determined based on the preset temperature value calibration table. A mapping relationship between a number of temperature data ranges and a number of temperature coefficients is recorded in the preset temperature value calibration table. The preset temperature value calibration table may be obtained and stored through testing before the hybrid vehicle 10 leaves the factory.

Step 622: The battery parameter reference value is multiplied by the temperature coefficient to obtain the battery parameter threshold. In this embodiment, Step 622 specifically includes: The residual capacity reference value is multiplied by the temperature coefficient to obtain the residual capacity threshold at the current temperature, and the current allowable discharge power is multiplied by the temperature coefficient to obtain the allowable discharge power threshold at the current temperature.

FIG. 8 is a schematic flowchart of another engine control method according to an embodiment of the present disclosure. Referring to FIG. 8, the method specifically includes the following steps 610 to 650.

Step 610: A current temperature of the engine 210, a current operation parameter of the power battery 400, and a battery parameter reference value are obtained. In this embodiment, the current operation parameter of the power battery 400 includes a current residual capacity and a current allowable discharge power. Correspondingly, the battery parameter reference value includes a residual capacity reference value and an allowable discharge power reference value.

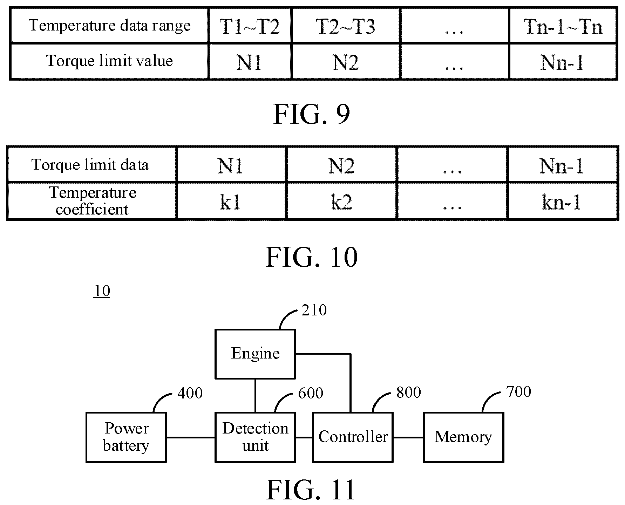

Step 6211: A torque limit value corresponding to the current temperature is determined. A lower current temperature indicates a smaller torque limit value corresponding to the current temperature. Exemplarily, the torque limit value corresponding to the current temperature may be determined in a manner of looking up a table. Specifically, a preset torque limit value calibration table is obtained, and the torque limit value corresponding to the current temperature is determined based on the preset torque limit value calibration table. A mapping relationship between a number of temperature data ranges and a number of torque limit values is recorded in the preset torque limit value calibration table. The preset torque limit value calibration table may be obtained and stored through testing before the hybrid vehicle 10 leaves the factory. For example, as shown in a torque limit value calibration table in FIG. 9, temperature data ranges include, for example, T1 to T2, T2 to T3, ..., and Tn-1 to Tn, and corresponding torque limit values are N1, N2, ..., and Nn-1 respectively, where T1 < T2 < T3 < ..., < Tn-1 < Tn, and N1 < N2 < ..., < Nn-1. For example, T1 to T2 is 0 °C to 10 °C, and N1 is 100 Nm. If a current temperature is 8 °C, a torque limit value corresponding to the current temperature is 100 Nm.

Step 6212: A temperature coefficient corresponding to the torque limit value is determined based on the torque limit value. A smaller torque limit value indicates a larger temperature coefficient corresponding to the torque limit value. Exemplarily, the temperature coefficient corresponding to the torque limit value may be determined in a manner of looking up a table. Specifically, a preset temperature coefficient calibration table is obtained, and the temperature coefficient corresponding to the torque limit value is determined based on the temperature coefficient calibration table. A mapping relationship between a number of torque limit data and a number of temperature coefficients is recorded in the preset temperature coefficient calibration table. The preset temperature coefficient calibration table may be obtained and stored through testing before the hybrid vehicle 10 leaves the factory. For example, as shown in a temperature coefficient calibration table in FIG. 10, torque limit data includes, for example, N1, N2, ..., and Nn-1, and corresponding temperature coefficients are k1, k2, ..., and kn-1 respectively, where N1 < N2 < ... < Nn-1, and k1 > k2 > ... > kn-1. For example, N1 is 100 Nm, and k1 is 1.5.

Step 622: The battery parameter reference value is multiplied by the temperature coefficient to obtain the battery parameter threshold. In this embodiment, Step 622 specifically includes: The residual capacity reference value is multiplied by the temperature coefficient to obtain the residual capacity threshold at the current temperature, and the current allowable discharge power is multiplied by the temperature coefficient to obtain the allowable discharge power threshold at the current temperature.

Step 630: If the current operation parameter of the power battery 400 is less than or equal to the battery parameter threshold, perform step 640; otherwise, return to step 610, to continue to obtain the current temperature of the engine 210, the current operation parameter of the power battery 400, and the battery parameter reference value. In this embodiment, the current operation parameter of the power battery 400 is compared with the battery parameter threshold. If the current residual capacity of the power battery 400 is less than or equal to the residual capacity threshold at the current temperature, or if the current allowable discharge power of the power battery 400 is less than or equal to the allowable discharge power threshold at the current temperature, it is determined that the current operation parameter of the power battery 400 is less than or equal to the battery parameter threshold.

Step 640: A starting signal is output to start the engine 210.

Step 650: The engine 210 is controlled to operate at torque lower than the torque limit value in preset time after starting. Because lubrication of the engine 210 is poor in a low-temperature environment, the engine 210 is controlled to operate at the torque lower than the torque limit value in the preset time after starting, to further protect the engine 210 from damage. The preset time may be determined based on warm-up time required by the engine 210.

According to the engine control method provided in the present disclosure, the battery parameter threshold of the power battery at the current temperature is determined based on the current temperature and the battery parameter reference value. A large battery parameter threshold is set at a low temperature. The engine 210 is started when the current operation parameter of the power battery 400 is less than or equal to the battery parameter threshold at the current temperature. In this way, in a low-temperature environment, the hybrid vehicle 10 starts the engine 210 when a driving capability of the power battery 400 is high, to prevent the engine 210 from outputting large torque when started, and provide sufficient warm-up time for the engine 210, thereby avoiding damage to the engine 210 due to poor lubrication.

Based on the same inventive concept, the present disclosure further provides a hybrid vehicle 10. Referring to FIG. 11, the hybrid vehicle 10 includes an engine 210, a power battery 400, a detection unit 600, a memory 700, and a controller 800.

The detection unit is electrically connected to the engine 210 and the power battery 400 separately. The detection unit 600 is configured to detect a current temperature of the engine 210 and a current operation parameter of the power battery 400. The memory 700 is configured to store executable instructions. The controller 800 is electrically connected to the detection unit 600 and the memory 700 separately. The controller 800 is configured to obtain the current temperature of the engine 210 and the current operation parameter of the power battery 400 that are detected by the detection unit 600, and execute the executable instructions stored in the memory based on the current temperature and the current operation parameter, to implement the foregoing engine control method. Exemplarily, the detection unit 600 includes a temperature sensor (not shown in the figure) and a battery management system (BMS). The temperature sensor is configured to obtain the current temperature of the engine 210. The battery management system is configured to obtain a current residual capacity or a current allowable discharge power of the power battery 400.

In some embodiments, the controller 800 may be a vehicle control unit 100. In other words, the engine control method provided in the present disclosure is performed by the vehicle control unit 100. For example, all the steps in the embodiment shown in FIG. 6 and all the steps in the embodiment shown in FIG. 8 are performed by the vehicle control unit 100. In some other embodiments, the controller 800 may include a vehicle control unit 100 and an engine controller 200 that are electrically connected to each other. In other words, the engine control method provided in the present disclosure is performed by the vehicle control unit 100 and the engine controller 200 in cooperation. The embodiment shown in FIG. 8 is used as an example. In an embodiment, the engine controller 200 is configured to obtain a current temperature of the engine 210, determine a corresponding torque limit value based on the current temperature, and output the torque limit value to the vehicle control unit 100. The vehicle control unit 100 is configured to obtain the current operation parameter and a battery parameter reference value of the power battery, determine a corresponding temperature coefficient based on the torque limit value, multiply the battery parameter reference value by the temperature coefficient to obtain a battery parameter threshold, determine whether the current operation parameter of the power battery 400 is less than or equal to the battery parameter threshold, output a starting signal when determining that the current operation parameter of the power battery 400 less than or equal to the battery parameter threshold to start the engine 210, and control the engine 210 to operate at torque lower than the torque limit value in preset time after starting.

Based on the same inventive concept, the present disclosure further provides a computer-readable storage medium. The computer-readable storage medium stores executable instructions. The executable instructions, when executed by a processor, implement the foregoing engine control method.

The computer-readable storage medium in the embodiments of the present disclosure may be any combination of one or more computer-readable media. The computer-readable medium may be a computer-readable signal medium or a computer-readable storage medium. For example, the computer-readable storage medium may be but is not limited to an electronic, magnetic, optical, electromagnetic, infrared, or semiconductor system, apparatus, or device, or any combination of the above. More specific examples (a non-exhaustive list) of the computer-readable storage medium include: an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that includes or stores a program. The program may be used by an instruction execution system, apparatus, or device or may be used in combination with the instruction execution system, apparatus, or device.

The computer-readable signal medium may include a data signal transmitted in a baseband or as a part of a carrier, and computer-readable program code is carried in the data signal. The transmitted data signal may be in multiple forms, including but not limited to an electromagnetic signal, an optical signal, or any suitable combination of the above. The computer-readable signal medium may alternatively be any computer-readable medium other than the computer-readable storage medium. The computer-readable medium may send, propagate, or transmit a program used by the instruction execution system, apparatus, or device or used in combination with the instruction execution system, apparatus, or device.

The program code included in the computer-readable medium may be transmitted in any suitable medium, including but not limited to wireless, wireline, optical cable, RF, or the like, or any suitable combination of the above.

The computer program code used for performing the operations of the present disclosure may be written in one or more programming languages or a combination thereof. The programming languages include object-oriented programming languages such as Java, Smalltalk, and C + +, and also include conventional procedural programming languages such as the C language and similar programming languages. The program code may be completely executed on a user computer, partially executed on a user computer, executed as an independent software package, partially executed on a user computer and partially executed on a remote computer, or completely executed on a remote computer or server. In the case of the remote computer, the remote computer may be connected to the user computer through any type of network, including a local area network (LAN) or a wide area network (WAN), or may be connected to an external computer (for example, through the Internet by using an Internet service provider).

Although the embodiments of the present disclosure have been shown and described, a person of ordinary skill in the art may understand that various changes, modifications, replacements, and variations may be made to the embodiments without departing from the principles and spirit of the present disclosure, and the scope of the present disclosure is defined by the appended claims and their equivalents.

## Claims

1. An engine control method, applied to a hybrid vehicle, the hybrid vehicle comprising an engine and a power battery, and the method comprising:
obtaining a current temperature of the engine, a current operation parameter of the power battery, and a battery parameter reference value;
determining a battery parameter threshold of the power battery at the current temperature based on the current temperature and the battery parameter reference value, wherein a lower current temperature indicates a larger battery parameter threshold corresponding to the current temperature, and
outputting (640), if the current operation parameter is less than or equal to the battery parameter threshold, a starting signal to start the engine.

2. The engine control method according to claim 1, wherein the determining a battery parameter threshold of the power battery at the current temperature based on the current temperature and the battery parameter reference value comprises:
determining a temperature coefficient corresponding to the current temperature, and
multiplying the battery parameter reference value by the temperature coefficient to obtain the battery parameter threshold.

3. The engine control method according to claim 2, wherein the determining a temperature coefficient corresponding to the current temperature based on the current temperature comprises:
determining a torque limit value corresponding to the current temperature, and
determining the temperature coefficient corresponding to the torque limit value.

4. The engine control method according to claim 3, wherein a lower current temperature indicates a smaller torque limit value corresponding to the current temperature, and a smaller torque limit value indicates a larger temperature coefficient corresponding to the torque limit value.

5. The engine control method according to claim 3 or 4, wherein the determining a torque limit value corresponding to the current temperature comprises:
obtaining a preset torque limit value calibration table, wherein a mapping relationship between a plurality of temperature data ranges and a plurality of torque limit values is recorded in the preset torque limit value calibration table, and
determining the torque limit value corresponding to the current temperature based on the preset torque limit value calibration table.

6. The engine control method according to claim 3 or 4, wherein the determining the temperature coefficient corresponding to the torque limit value comprises:
obtaining a preset temperature coefficient calibration table, wherein a mapping relationship between a plurality of pieces of torque limit data and a plurality of temperature coefficients is recorded in the preset temperature coefficient calibration table, and
determining the temperature coefficient corresponding to the torque limit value based on the preset temperature coefficient calibration table.

7. The engine control method according to any one of claims 2 to 4, wherein the current operation parameter of the power battery comprises a current residual capacity, the battery parameter reference value comprising a residual capacity reference value, and the battery parameter threshold comprising a residual capacity threshold.

8. The engine control method according to any one of claims 2 to 4, wherein the current operation parameter of the power battery comprises a current allowable discharge power, the battery parameter reference value comprises an allowable discharge power reference value, and the battery parameter threshold comprises an allowable discharge power threshold.

9. A hybrid vehicle, comprising
an engine (210);
a power battery (400);
a detection unit (600), electrically connected to the engine (210) and the power battery (400) separately, and configured to detect a current temperature of the engine (210) and a current operation parameter of the power battery (400);
a memory (700), configured to store executable instructions, and
a controller (800), electrically connected to the detection unit (600) and the memory (700) separately, and configured to obtain the current temperature of the engine (210) and the current operation parameter of the power battery (400) that are detected by the detection unit (600), and execute the executable instructions stored in the memory based on the current temperature and the current operation parameter, to implement the method according to any one of claims 1 to 8.

10. A computer-readable storage medium, storing executable instructions, the executable instructions, when executed by a processor, implementing the method according to any one of claims 1 to 8.
